# FASCICULE DE BREVET EUROPEEN

(11) **EP 2 488 374 B1**
(45) Date de publication et mention de la délivrance du brevet: **30.04.2014**
(21) Numéro de dépôt: 10766271.0
(22) Date de dépôt: 12.10.2010
(51) Int. Cl.: B60C 1/00, C08L 15/00, C08K 5/103, C08C 19/06

(54) **COMPOSITION DE CAOUTCHOUC A BASE D'UN CAOUTCHOUC SYNTHETIQUE EPOXYDE, BANDE DE ROULEMENT POUR PNEUMATIQUE LA CONTENANT**
KAUTSCHUKZUSAMMENSETZUNG BASIEREND AUF SYNTHETISCHEM KAUTSCHUK UND REIFENLAUFFLAECHE HIERVON
RUBBER COMPOSITION COMPRISING SYNTHETIC RUBBER AND TIRE TREAD THEREOF

(30) Priorité: 14.10.2009 FR 0957180
(43) Date de publication de la demande: 22.08.2012
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: LOPITAUX, Garance, F-03330 Valignat (FR); VASSEUR, Didier, F-63100 Clermont-Ferrand (FR); VARAGNIAT, Franck, F-63122 Ceyrat (FR)
(74) Mandataire: Le Cam, Véronique Marie Christine
(86) Numéro de dépôt international: PCT/EP2010/065263
(87) Numéro de publication internationale: WO 2011/045307

(56) Documents cités:
- WO-A1-02/088238
- FR-A1- 2 916 202
- DATABASE WPI Week 200648 Thomson Scientific, London, GB; AN 2006-467620 XP002578080, & JP 2006 169434 A (SUMITOMO RUBBER IND LTD) 29 juin 2006 (2006-06-29)
- DATABASE WPI Week 200809 Thomson Scientific, London, GB; AN 2008-B33999 XP002578081, & JP 2007 284544 A (TOYO RUBBER IND CO LTD) 1 novembre 2007 (2007-11-01)

## Description

La présente invention se rapporte aux compositions de caoutchoucs destinées notamment à la fabrication de pneumatiques ou de produits semi-finis pour pneumatiques, elle est plus particulièrement relative aux compositions de caoutchoucs à base de caoutchouc synthétiques époxydés (ci après « ESR ») et de systèmes plastifiants, utilisables pour la fabrication de bandes de roulement de pneumatiques.

Une bande de roulement de pneumatique doit obéir de manière connue à un grand nombre d'exigences techniques, souvent antinomiques, parmi lesquelles une faible résistance au roulement, une résistance élevée à l'usure, ainsi qu'une adhérence élevée sur route sèche comme mouillée.

L'amélioration combinée des propriétés d'adhérence et de résistance au roulement reste une préoccupation constante des concepteurs de pneumatiques.

Il est connu d'utiliser des élastomères caoutchouc naturel époxydés (ENR) dans des bandes de roulement de pneumatiques pour améliorer certaines de leurs propriétés d'usage, en particulier les performances d'adhérence sur sol mouillé, de résistance au roulement et de résistance à l'abrasion, comme décrit par exemple dans les documents US 7371791, US 6220323, EP 0644235 ou EP 1577341.

Il est également connu par le document US 2006/128868 A1 d'utiliser des élastomères fonctionnalisés par une ou plusieurs fonctions choisies parmi deux catégories de fonctions, amine ou amide d'une part et diverses fonctions parmi lesquelles une fonction époxy d'autre part, en d'autres termes un ESR, dans une composition de caoutchouc pouvant contenir une huile d'extension servant à la fabrication de bandes de roulement de pneumatiques, à base d'élastomères diéniques synthétiques choisis parmi les homopolymères de l'isoprène et du 1,3-butadiène et les copolymères de l'isoprène et du 1,3-butadiène avec du styrène, éventuellement en coupage avec un autre élastomère diénique synthétique, dans le but de faciliter le travail sur outils, c'est-à-dire d'améliorer la mise en oeuvre à cru de la composition contenant de la silice à titre de charge renforçante.

Par ailleurs, les compositions de caoutchouc pour pneumatiques comportent de manière connue des agents plastifiants utilisés pour la préparation ou la synthèse de certains élastomères diéniques, pour améliorer la mise en oeuvre à cru desdites compositions à l'état cru ainsi que certaines de leurs propriétés d'usage à l'état cuit comme par exemple, dans le cas des bandes de roulement de pneumatiques, leur adhérence sur sol mouillé ou encore leur résistance à l'abrasion et aux coupures.

Poursuivant leurs recherches, les Demanderesses ont découvert que l'utilisation d'une composition de caoutchouc comportant un élastomère ESR comportant un taux de fonctions époxy situé dans une fourchette de valeurs associé à une charge renforçante et à un agent plastifiant, permet d'obtenir un compromis de propriétés encore amélioré, favorable à l'adhérence sur sol mouillé et à la résistance au roulement des bandes de roulement de pneumatiques.

Ainsi, un premier objet de l'invention concerne une composition de caoutchouc renforcée, à base au moins d'une matrice élastomérique comprenant à titre majoritaire un caoutchouc synthétique époxydé (ESR) ayant un taux de fonction époxy allant de 7 % à 25%, une charge renforçante dont au moins 50% en poids de la charge renforçante est constitué d'une charge inorganique, et un agent plastifiant comprenant un plastifiant liquide polaire.

L'invention a également pour objet l'utilisation de cette composition de caoutchouc renforcée pour la fabrication de pneumatiques ou de produits semi-finis pour pneumatiques en particulier de bandes de roulement de pneumatiques.

L'invention a également pour objet l'utilisation de cette composition de caoutchouc renforcée pour la fabrication de pneumatiques ou de produits semi-fmis pour pneumatiques, en particulier de bandes de roulement de pneumatiques, que ces dernières soient destinées à la fabrication de pneumatiques neufs comme au rechapage de pneumatiques usagés pour obtenir une adhérence sur sol mouillé améliorée.

L'invention a également pour objet ces produits semi-finis pour pneumatiques et ces pneumatiques eux-mêmes, lorsqu'ils comportent en tout ou en partie une composition conforme à l'invention.

L'invention a également pour objet un procédé pour améliorer l'adhérence sur sol mouillé d'un pneumatique ou améliorer à la fois l'adhérence sur sol mouillé et la résistance au roulement d'un pneumatique.

Les pneumatiques de l'invention sont particulièrement destinés à équiper des véhicules à moteur de type tourisme, SUV (*"Sport Utility Vehicles"*)*,* deux roues (notamment motos), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil, autres véhicules de transport ou de manutention.

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Dans la présente description, sauf indication expresse différente, tous les pourcentages (%) indiqués sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

La composition de caoutchouc selon l'invention est donc à base au moins d'une matrice élastomérique comprenant un caoutchouc synthétique époxydé (ESR) ayant un taux de fonction époxy allant de 7 % à 25%, d'une charge renforçante dont au moins 50% en poids de la charge renforçante est constitué d'une charge inorganique, et d'un agent plastifiant comprenant un plastifiant liquide polaire.

La composition de caoutchouc utilisée dans le cadre de l'invention a pour première caractéristique essentielle de comprendre au moins un caoutchouc diénique synthétique époxydé (en abrégé « ESR »). Par "I'ESR" selon l'invention, il faut comprendre un caoutchouc diénique synthétique époxydé ou un mélange de plusieurs caoutchoucs diéniques synthétiques époxydés.

Par élastomère ou caoutchouc "diénique", doit être compris de manière connue un élastomère issu au moins en partie (i.e., un homopolymère ou un copolymère) de monomères diènes (monomères porteurs de deux doubles liaisons carbone-carbone, conjuguées ou non).

Par élastomère diénique, doit être compris selon l'invention tout élastomère synthétique issu au moins en partie de monomères diènes. Plus particulièrement, par élastomère diénique, on entend tout homopolymère obtenu par polymérisation d'un monomère diène conjugué ayant 4 à 12 atomes de carbone, ou tout copolymère obtenu par copolymérisation d'un ou plusieurs diènes conjugués entre eux ou avec un ou plusieurs composés vinylaromatiques ayant de 8 à 20 atomes de carbone. Dans le cas de copolymères, ceux-ci contiennent de 20 % à 99 % en poids d'unités diéniques, et de 1 à 80 % en poids d'unités vinylaromatiques .

A titre de diènes conjugués utilisables dans le procédé conforme à l'invention conviennent notamment le butadiène-1,3, le 2-méthyl-1,3-butadiène, les 2,3 di(alcoyle en C1 à C5)-1,3-butadiène tels que par exemple le 2,3-diméthyl-1,3-butadiène, 2,3-diéthyl-1,3-butadiène, 2-méthyl-3-éthyl-1,3-butadiène, le 2-méthyl-3-isopropyl-1,3-butadiène, le phényl-1,3-butadiène, le 1,3-pentadiène, le 2,4 hexadiène, etc.

A titre de composés vinylaromatiques conviennent notamment le styrène, l'ortho-, méta, para-méthylstyrène, le mélange commercial "vinyltoluène", le para-tertiobutylstyrène, les méthoxystyrènes, le vinylmésitylène, le divinylbenzène, le vinylnaphtalène, etc.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse, mesurée selon norme ASTM D3418) comprise entre 0°C et - 70°C et plus particulièrement entre - 10°C et - 60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 25°C et - 50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités - 1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre-20°C et - 70°C.

En résumé, l'élastomère diénique de la composition conforme à l'invention est choisi préférentiellement dans le groupe des élastomères diéniques fortement insaturés constitué par les polybutadiènes (en abrégé "BR"), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR), et plus particulièrement encore parmi ceux-ci, les SBR, les SIR et les SBIR.

Les caoutchoucs diéniques synthétiques époxydés (ESR) conformes à l'invention ont de préférence une Tg comprise entre - 10°C et - 60°C, et plus particulièrement allant de - 20°C à - 40°C.

Les caoutchoucs diéniques synthétiques époxydés (ESR) peuvent être obtenus, comme connu en soi, par époxydation des élastomères diéniques synthétiques, par exemple par des procédés à base de chlorohydrine ou de bromohydrine ou des procédés à base de peroxydes d'hydrogène, d'alkyl hydroperoxides ou de peracides (tel que acide peracétique ou acide performique).

Pour obtenir l'effet technique visé, Le taux d'époxydation (% en mole) de l'ESR est dans un domaine allant de 7 à 25%. Quand le taux d'époxydation est inférieur à 7%, l'effet technique visé (amélioration de l'adhérence sur sol mouillé) risque d'être insuffisant; au-delà de 25%, l'effet technique visé est certes amélioré mais tan (δ) à 40°C augmente, c'est-à-dire que la résistance au roulement est pénalisée. Pour ces raisons, le taux d'époxydation de l'ESR doit être compris dans un domaine allant de 7% à 25%. Il est de préférence compris dans un domaine allant de 7% à 15%. En effet, dans ce domaine on peut observer non seulement une amélioration de l'adhérence sur sol mouillé, mais encore une amélioration très inattendue des propriétés d'hystérèse et donc une diminution de la résistance au roulement.

La composition de caoutchouc utilisée dans le cadre de l'invention comprend de préférence plus de 40 pce d'ESR; plus préférentiellement encore le taux d'ESR est compris dans un domaine allant de 50 à 100 pce, en particulier dans un domaine allant de 70 à 100 pce.

Le caoutchouc ESR peut être constitué, selon l'invention, d'un mélange de plusieurs caoutchoucs diéniques synthétiques époxydés conformes à l'invention.

Au caoutchouc ESR ci-dessus, peut être être associé un ou plusieurs autre(s) élastomère(s) diénique(s) conventionnellement utilisés dans les enveloppes de pneumatiques et choisis parmi le caoutchouc naturel et les élastomères diéniques synthétiques, éventuellement couplés et/ou étoilés et/ou fonctionnalisés, de manière connue en soi, au moyen d'un agent de fonctionnalisation, de couplage ou d'étoilage, et les mélanges de ces élastomères.

Ce ou ces autres élastomères diéniques sont alors présents dans la matrice selon un taux compris entre 0 et 60 pce (les bornes de ce domaine étant exclues), préférentiellement selon un taux allant de plus de 0 à 50 pce, plus préférentiellement encore de plus de 0 à 30 pce.

Dans le cas d'un coupage avec au moins un autre élastomère diénique, la fraction massique d'ESR dans la matrice élastomérique est majoritaire et de préférence supérieure ou égale à 50% en poids du poids total de la matrice. On appelle fraction massique majoritaire selon l'invention la fraction massique la plus élevée du coupage.

On notera que l'amélioration des propriétés de la composition de caoutchouc selon l'invention sera d'autant plus élevée, que la proportion dudit ou desdits élastomères complémentaires dans la composition selon l'invention sera plus réduite.

La composition de caoutchouc selon l'invention comprend également une charge renforçante dont au moins 50% en poids de la charge renforçante est constitué d'une charge inorganique

Par "charge inorganique renforçante", doit être entendu dans la présente demande, par définition, toute charge inorganique ou minérale (quelles que soient sa couleur et son origine naturelle ou de synthèse), encore appelée charge "blanche", charge "claire" voire "charge non noire" (*"non-black filler"*) par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

La charge inorganique renforçante utilisée, en particulier s'il s'agit de silice, a de préférence une surface BET comprise entre 45 et 400 m²/g, plus préférentiellement comprise entre 60 et 300 m²/g.

On peut utiliser en coupage de cette charge inorganique renforçante une charge organique telle que du noir de carbone.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

De manière préférentielle, le taux de charge renforçante totale (charge inorganique renforçante telle que silice et/ou charge organique telle que du noir de carbone) est supérieur ou égal à 50 pce, plus préférentiellement de 50 à 150 pce (incluant ces bornes). L'optimum étant de manière connue différent selon les applications particulières visées : le niveau de renforcement attendu sur un pneumatique vélo, par exemple, est bien sûr inférieur à celui exigé sur un pneumatique apte à rouler à grande vitesse de manière soutenue, par exemple un pneu moto, un pneu pour véhicule de tourisme ou pour véhicule utilitaire tel que Poids lourd.

Selon un mode de réalisation préférentiel de l'invention, on utilise une charge renforçante comportant de 50 à 150 pce (incluant ces bornes), préférentiellement de 50 à 130 pce de charge inorganique, particulièrement de silice, et optionnellement une charge organique telle que du noir de carbone ; le noir de carbone, lorsqu'il est présent, est utilisé de préférence à un taux inférieur ou égal à 20 pce, plus préférentiellement inférieur à 10 pce (par exemple entre 0,1 et 10 pce).

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale (I) suivante:
(I) Z - A - Sₓ - A - Z , dans laquelle:
- x est un entier de 2 à 8 (de préférence de 2 à 5) ;
- les symboles A, identiques ou différents, représentent un radical hydrocarboné divalent (de préférence un groupement alkylène en C₁-C₁₈ ou un groupement arylène en C₆-C₁₂, plus particulièrement un alkylène en C₁-C₁₀, notamment en C₁-C₄, en particulier le propylène) ;
- les symboles Z, identiques ou différents, répondent à l'une des trois formules ci-après: 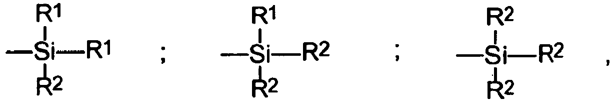 dans lesquelles:
- les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
- les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silylakyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 précitée (ou US 7 217 751).

A titre d'exemple d'agents de couplage autres qu'un alkoxysilane polysulfuré, on citera notamment des POS (polyorganosiloxanes) bifonctionnels ou encore des polysulfures d'hydroxysilane (R² = OH dans la formule I ci-dessus) tels que décrits par exemple dans les demandes de brevet WO 02/30939 (ou US 6 774 255), WO 02/31041 (ou US 2004/051210), et WO2007/06155, ou encore des silanes ou POS porteurs de groupements fonctionnels azodicarbonyle, tels que décrits par exemple dans les demandes de brevet WO 2006/125532, WO 2006/125533, WO 2006/125534.

A titre d'exemples d'autres silanes sulfurés, on citera par exemple les silanes porteurs d'au moins une fonction thiol (-SH) (dits mercaptosilanes) et/ou d'au moins une fonction thiol bloqué, tels que décrits par exemple dans les brevets ou demandes de brevet US 6 849 754, WO 99/09036, WO 2006/023815, WO 2007/098080.

Bien entendu pourraient être également utilisés des mélanges des agents de couplage précédemment décrits, comme décrit notamment dans la demande WO 2006/125534 précitée.

Dans les couches élastomères de protection, lorsqu'elles sont renforcées par une charge inorganique telle que silice, la teneur en agent de couplage va préférentiellement de 4 à 15 pce, plus préférentiellement de 4 à 12 pce.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

La composition de caoutchouc selon l'invention comprend également, à titre de composant essentiel, un agent plastifiant comprenant un plastifiant liquide polaire. On entend par "plastifiant liquide polaire" également que l'agent plastifiant peut comprendre un mélange de deux ou de plusieurs plastifiant(s) liquide(s) polaire(s). L'utilisation de cet agent plastifiant liquide polaire s'avère être bénéfique sur d'autres propriétés mécaniques de la composition de caoutchouc, ce qui confère par exemple au pneumatique qui l'incorpore dans sa bande de roulement une résistance vis-à-vis de l'abrasion améliorée.

Par plastifiant liquide, on entend de manière connue un plastifiant liquide à 20 °C, dit à « basse Tg », c'est-à-dire qui par définition présente une Tg inférieure à -20 °C, de préférence inférieure à -40 °C. Les plastifiants liquides, de préférence non aromatiques ou très faiblement aromatiques, peuvent être répartis dans deux catégories: les plastifiants polaires et les plastifiants non polaires

Parmi ces plastifiants non polaires, on peut citer les huiles naphténiques, notamment hydrogénées, paraffiniques, les huiles MES (mild extract solvant), HPD (hydrogenated paraffinic distillation) ou TDAE (Treated Distillate Aromatic Extracts) et les mélanges de ces composés.

Parmi les plastifiant polaires, on peut citer les plastifiants esters, éthers, les plastifiants phosphates et sulfonates et les mélanges de ces composés. Sont particulièrement préférés les composés choisis dans le groupe constitué par les phosphates, les trimellitates, les pyromellitates, les phtalates, les 1,2-cyclohexane dicarboxylates, les adipates, les azélaates, les sébacates, les triesters de glycérol et les mélanges de ces composés. Parmi les triesters de glycérol, on préfère les trioléates de glycérol et plus particulièrement l'huile de tournesol oléique.

Ainsi, selon un aspect préférentiel de l'invention, l'agent plastifiant comprenant un plastifiant liquide polaire comprend plus particulièrement un triester de glycérol, tel que l'huile de tournesol oléique.

Selon un mode de réalisation de l'invention, l'agent plastifiant peut comprendre, outre le plastifiant liquide polaire, un plastifiant liquide non-polaire tel que décrit plus haut.

Selon un autre mode de réalisation de l'invention, l'agent plastifiant peut comprendre, outre le plastifiant liquide polaire, une résine hydrocarbonée solide. De manière connue de l'homme du métier, la dénomination "résine " est réservée dans la présente demande, par définition, à un composé qui est un solide à température ambiante (23°C) (par opposition à un composé plastifiant liquide tel qu'une huile). Cette résine a une Tg supérieure à 0°C, de préférence supérieure à + 20°C.

Les résines hydrocarbonées peuvent être aliphatiques, ou aromatiques ou encore du type aliphatique/ aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole).

A titre d'exemple, la résine plastifiante hydrocarbonée est choisie dans le groupe constitué par les résines d'homopolymère ou copolymère de cyclopentadiène (en abrégé CPD) ou dicyclopentadiène (en abrégé DCPD), les résines d'homopolymère ou copolymère terpène, les résines d'homopolymère ou copolymère terpène phénol, les résines d'homopolymère ou copolymère de coupe C5, les résines d'homopolymère ou copolymère de coupe C9 et les mélanges de ces résines. Parmi ces résines plastifiantes hydrocarbonées terpéniques, on citera notamment les résines d'homo- ou copolymères d'alphapinène, betapinène, dipentène ou polylimonène.

De manière préférentielle, le taux de plastifiant est compris dans un domaine de 5 à 70 pce. En dessous du minimum indiqué, l'effet technique visé peut s'avérer insuffisant, alors qu'au-delà du maximum, le pouvoir collant des compositions à l'état cru, sur les outils de mélangeage, peut dans certains cas devenir rédhibitoire du point de vue industriel. Pour ces raisons, le taux de plastifiant est plus préférentiellement compris dans un domaine allant de 10 à 40, particulièrement de 15 à 35 pce.

La composition de caoutchouc conforme à l'invention peut également comporter tout ou partie des additifs usuels habituellement utilisés dans les compositions d'élastomères destinées notamment à la fabrication de bandes de roulement, comme par exemple des pigments, des agents de protection tels que cires anti-ozone, anti-ozonants chimiques, antioxydants, , des agents anti-fatigue, des résines renforçantes, telles que des accepteurs (par exemple résine phénolique novolaque) ou des donneurs de méthylène (par exemple HMT ou H3M), un système de réticulation à base soit de soufre, soit de donneurs de soufre et/ou de peroxyde et/ou de bismaléimides, des accélérateurs de vulcanisation, des activateurs de vulcanisation.

Ces compositions peuvent également comporter, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

Les compositions de caoutchouc utilisées dans le cadre de l'invention peuvent être fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé pour préparer de telles compositions comporte par exemple les étapes suivantes :
- incorporer à un élastomère diénique ESR, au cours d'une première étape (dite "non-productive"), au moins une charge renforçante et un agent plastifiant comprenant un plastifiant liquide polaire, en malaxant thermomécaniquement le tout (par exemple en une ou plusieurs fois), jusqu'à atteindre une température maximale comprise entre 110°C et 190°C ;
- refroidir l'ensemble à une température inférieure à 100°C ;
- incorporer ensuite, au cours d'une seconde étape (dite "productive"), un système de réticulation ;
- malaxer le tout jusqu'à une température maximale inférieure à 110°C.

A titre d'exemple, la phase non-productive est conduite en une seule étape thermomécanique au cours de laquelle on introduit, dans un mélangeur approprié tel qu'un mélangeur interne usuel, dans un premier temps tous les constituants de base nécessaires (ESR et éventuel autre élastomère diénique, agent plastifiant, charge renforçante et agent de couplage), puis dans un deuxième temps, par exemple après une à deux minutes de malaxage, les autres additifs, éventuels agents de recouvrement de la charge ou de mise en oeuvre complémentaires, à l'exception du système de réticulation. La durée totale du malaxage, dans cette phase non-productive, est de préférence comprise entre 1 et 15 min.

Après refroidissement du mélange ainsi obtenu, on incorpore alors dans un mélangeur externe tel qu'un mélangeur à cylindres, maintenu à basse température (par exemple entre 40°C et 100°C), le système de réticulation. L'ensemble est alors mélangé (phase productive) pendant quelques minutes, par exemple entre 2 et 15 min.

La composition finale ainsi obtenue peut ensuite être calandrée, par exemple sous la forme d'une feuille, d'une plaque notamment pour une caractérisation au laboratoire, ou encore extrudée, par exemple pour former un profilé de caoutchouc utilisé pour la fabrication d'une bande de roulement.

L'invention concerne les compositions de caoutchouc, les pneumatiques et les bandes de roulement de pneumatiques précédemment décrits tant à l'état cru (c'est à dire, avant cuisson) qu'à l'état cuit (c'est à dire, après réticulation ou vulcanisation).

Les caractéristiques précitées de la présente invention, ainsi que d'autres, seront mieux comprises à la lecture de la description suivante de plusieurs exemples de réalisation de l'invention, donnés à titre illustratif et non limitatif .

### EXEMPLES DE REALISATION DE L'INVENTION

### I - MESURES ET TESTS UTILISES

### 1.1 - Propriétés dynamiques

Les propriétés dynamiques sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, lors d'un balayage en température, sous une contrainte fixe de 0,7 MPa, on enregistre la valeur de tan(δ) observée à 0°C et la valeur de tan(δ) observée à 40°C.

On rappelle que, de manière bien connue de l'homme du métier, la valeur de tan(δ) à 0°C est représentative du potentiel d'adhérence sur sol mouillé : plus tan(δ) à 0°C est élevée, meilleure est l'adhérence. La valeur de tan(δ) à 40°C est représentative de l'hystérèse du matériau donc de la résistance au roulement : plus tan(δ) à 40°C est faible, plus la résistance au roulement est réduite.

### II - REALISATION DES COMPOSITIONS ET TESTS

### II.1 - Préparation des compositions

On procède pour les essais qui suivent de la manière suivante : on introduit dans un mélangeur interne d'environ 3 litres (taux de remplissage final : environ 70% en volume), dont la température initiale de cuve est d'environ 70°C, à 0 min 2/3 de la charge (silice et noir de carbone), l'agent de couplage en présence de silice, l'ESR. On conduit alors un travail thermomécanique (phase non-productive) en une étape avec une vitesse des palettes de 50tr/min jusqu'à atteindre une température de 95°C. Lorsque la température de 95°C est atteinte, on ajoute le dernier 1/3 de la charge, l'agent plastifiant, ainsi que les divers autres ingrédients y compris un accélérateur si plusieurs accélérateurs sont utilisés à l'exception d'une part du système de vulcanisation et d'autre part du ZnO, tout en poursuivant le travail thermomécanique qui dure au total environ 5 min, pour atteindre une température maximale de « tombée » de 165°C.

On récupère le mélange ainsi obtenu, on le refroidit puis on incorpore du soufre et un accélérateur type sulfénamide sur un mélangeur (homo-finisseur) à 50 °C, en mélangeant le tout (phase productive) pendant un temps approprié (par exemple entre 5 et 12 min).

Les compositions ainsi obtenues sont ensuite calandrées soit sous la forme de plaques (épaisseur de 2 à 3 mm) ou de feuilles fines de caoutchouc pour la mesure de certaines propriétés, soit extrudées sous la forme d'une bande de roulement.

### II.2 - Exemple 1

Les essais démontrent l'amélioration, en termes d'adhérence sur sol mouillé et de résistance au roulement, apportée par une composition conforme à l'invention, comparativement à une composition témoin.

Pour cela, sept compositions de caoutchouc à base d'une matrice élastomérique SBR ont été préparées comme indiqué précédemment, huit avec un ESR (notées B à G) se distinguant par le taux d'époxydation différent de l'ESR et une avec un SBR non époxydé (témoin noté A).

Le détail des compositions est résumé dans le tableau 1.

**Tableau 1**

| **Composants** | **A** (Témoin) | **B** | **C** | **D** | **E** | **F** | **G** |
|---|---|---|---|---|---|---|---|
| Elastomère SBR solution (1) | 100 | | | | | | |
| SBR solution époxydé à 2% (2) | | 100 | | | | | |
| SBR solution époxydé à 7% (2) | | | 100 | | | | |
| SBR solution époxydé à 15% (2) | | | | 100 | | | |
| SBR solution époxydé à 19% (2) | | | | | 100 | | |
| SBR solution époxydé à 25% (2) | | | | | | 100 | |
| SBR solution époxydé à 30% (2) | | | | | | | 100 |
| Silice Z1165MP de Rhodia (3) | 80 | 80 | 80 | 80 | 80 | 80 | 80 |
| Agent de couplage TESPT (Si69 Degussa) (4) | 6.4 | 6.4 | 6.4 | 6.4 | 6.4 | 6.4 | 6.4 |
| N234 (5) | 6 | 6 | 6 | 6 | 6 | 6 | 6 |
| PLASTIFIANT (6) | 30 | 30 | 30 | 30 | 30 | 30 | 30 |
| Cire ozone C32ST (7) | 1.5 | 1.5 | 1.5 | 1.5 | 1.5 | 1.5 | 1.5 |
| Agent antioxydant (6PPD) (8) | 1.9 | 1.9 | 1.9 | 1.9 | 1.9 | 1.9 | 1.9 |
| Diphénylguanidine (DPG) (9) | 1.5 | 1.5 | 1.5 | 1.5 | 1.5 | 1.5 | 1.5 |
| ZnO (10) | 2.5 | 2.5 | 2.5 | 2.5 | 2.5 | 2.5 | 2.5 |
| Acide stéarique (11) | 2 | 2 | 2 | 2 | 2 | 2 | 2 |
| Soufre | 1.1 | 1.1 | 1.1 | 1.1 | 1.1 | 1.1 | 1.1 |
| CBS (12) | 2 | 2 | 2 | 2 | 2 | 2 | 2 |

| | | | | | | | |
|---|---|---|---|---|---|---|---|
| (1) SBR solution avec 40% de styrène et de Tg -30°C (s-SBR). (2) SBR solution avec 40% de styrène avec différents taux de fonction époxy. (3) silice : « Zeosil 1165 MP » de la société Rhodia, type « HD » (BET et CTAB : environ 160 m²/g) ; (4) agent de couplage TESTP (« Si69 » de la société Dégussa) ; (5) noir de carbone N234 (grade ASTM) ; (6) trioléate de glycérol (huile de tournesol à 85 % en poids d'acide oléique, « lubrirob Tod 1880 » de la société Novance) (7) cire ozone C32ST (8)N-1,3-diméthylbutyl-N-phénylparaphénylènediamine (Santoflex 6-PPD de la société Flexsys (9) Diphénylguanidine (« Perkacit DPG » de la société Flexsys) (10) oxyde de zinc (grade industriel - société Umicore) (11) stéarine ( "Pristerene" de la société Uniquema); (12)N-cyclohexyl-2-benzothiazyl-sulfénamide (Santocure CBS de la société Flexsys) ; | | | | | | | |

Les propriétés mécaniques des compositions sont résumées respectivement dans le tableau 2.

**Tableau 2**

| Composition | **A** (Témoin) | **B** | **C** | **D** | **E** | **F** | **G** |
|---|---|---|---|---|---|---|---|
| tan (δ) à 0°C (0.7 MPa) | 0.43 | 0.42 | 0.48 | 0.67 | 0.85 | 0.99 | 0.93 |
| tan (δ) à 40°C (0.7 MPa) | 0.21 | 0.20 | 0.18 | 0.18 | 0.21 | 0.20 | 0.25 |

On note que les compositions C, D, E et F conformes à l'invention montrent un niveau de tan (δ) à 0°C plus fort que la composition B témoin, et ceci en même temps soit qu'une amélioration des propriétés dynamiques à 40°C, soit une constance desdites propriétés. On note que la composition B à base d'un ESR qui n'a pas assez (2%) de fonction époxy ne permet pas d'améliorer l'adhérence sur sol mouillé, tandis que la composition G à base d'un ESR qui a trop de fonctions époxy permet certes d'obtenir l'effet visé mais au prix d'une pénalisation sévère de la résistance au roulement.

L'amélioration de l'adhérence sur sol mouillé est très significativement améliorée à résistance au roulement constante, sachant que l'homme du métier considère une amélioration de 0.02 du niveau de tan (δ) comme une vraie amélioration au niveau de la performance du pneumatique.

On note que les compositions à base de SBR époxydés conformes à l'invention présentent des propriétés dynamiques qui sont de manière inattendue sensiblement améliorées lorsque le taux d'époxydation des ESR va de 7% à 25%:
- avec une valeur de tan(δ) à 0°C qui est nettement plus élevée que celle de la composition témoin A, indicateur reconnu d'une adhérence améliorée sur sol mouillé.
- avec d'une part une valeur de tan(δ) à 40°C qui est sensiblement inchangée voire simultanément améliorée par rapport à celle de la composition témoin A, synonyme pour l'homme du métier d'une hystérèse et donc d'une résistance au roulement inchangée.

On peut conclure en comparant les résultats de ce tableau que l'utilisation dans une bande de roulement de pneumatiques de l'association élastomères diéniques époxydés et huile plastifiante polaire permet de maximiser l'adhérence sur sol humide sans pénaliser la résistance au roulement et d'obtenir un compromis de propriétés amélioré vis-à-vis de l'adhérence sur sol mouillé et de la résistance au roulement.

### II.3 - Exemple 2

Trois compositions de caoutchouc à base d'une matrice élastomérique PI ont été préparées comme indiqué précédemment, deux conformes à l'invention (notées I, J) et une non-conforme (témoin noté ci-après H).

Les compositions I et J conformes à l'invention comprennent 100 pce d'ESR et se distinguent par le taux d'époxydation différent de l'ESR. La composition témoin H comprend 100 pce de PI non fonctionnalisé et un agent plastifiant.

Le détail de formulation des compositions est résumé dans le tableau 3.

**Tableau 3**

| **Composants** | **H** (Témoin) | **I** | **J** |
|---|---|---|---|
| Elastomère PI (1) | 100 | | |
| PI époxydé à 12% (2) | | 100 | |
| PI époxydé à 25% (2) | | | 100 |
| Silice(3) | 80 | 80 | 80 |
| Agent de couplage (4) | 6.4 | 6.4 | 6.4 |
| Noir (5) | 6 | 6 | 6 |
| PLASTIFIANT (6) | 30 | 30 | 30 |
| Cire ozone C32ST (7) | 1.5 | 1.5 | 1.5 |
| Agent antioxydant (8) | 1.9 | 1.9 | 1.9 |
| Diphénylguanidine (9) | 1.5 | 1.5 | 1.5 |
| ZnO (10) | 2.5 | 2.5 | 2.5 |
| Acide stéarique (11) | 2 | 2 | 2 |
| Soufre | 1.1 | 1.1 | 1.1 |
| CBS (12) | 2 | 2 | 2 |

| | | | |
|---|---|---|---|
| (1) Polyisoprène 40% de IR3,4 de Tg -36°C (2) Polyisoprène 40% de IR3,4 avec différents taux de fonction époxy (3) silice : « Zeosil 1165 MP » de la société Rhodia, type « HD » (BET et CTAB : environ 160 m²/g) ; (4) agent de couplage TESTP (« Si69 » de la société Dégussa) ; (5) noir de carbone N234 (grade ASTM) ; (6) trioléate de glycérol (huile de tournesol à 85 % en poids d'acide oléique, « lubrirob Tod 1880 » de la société Novance) (7) cire ozone C32ST (8)N-1,3-diméthylbutyl-N-phénylparaphénylènediamine (Santoflex 6-PPD de la société Flexsys) (9) Diphénylguanidine (« Perkacit DPG » de la société Flexsys) (10) oxyde de zinc (grade industriel - société Umicore) (11) stéarine ("Pristerene" de la société Uniquema); (12)N-cyclohexyl-2-benzothiazyl-sulfénamide (Santocure CBS de la société Flexsys) ; | | | |

Les propriétés mécaniques sont résumées respectivement dans le tableau 4.

**Tableau 4**

| Composition | **H** (Témoin) | **I** | **J** |
|---|---|---|---|
| tan (δ) à 0°C (0.7 MPa) | 0.55 | 0.69 | 1.15 |
| tan (δ) à 40°C (0.7 MPa) | 0.22 | 0.17 | 0.21 |

Les compositions I et J, conformes à l'invention, montrent un niveau de tan (δ) à 0°C plus fort que la composition H témoin sans modification significative des propriétés dynamiques. L'utilisation de PI époxydé à des taux respectivement de 12 et 25% permet d'augmenter fortement la dissipation à 0°C, par conséquent l'adhérence sur sol humide, tout en améliorant la propriété dynamique tan (δ) à 40°C, c'est-à-dire la résistance au roulement d'une bande de roulement réalisée avec de telles compositions.

En outre, les résultats de ces essais montrent que l'emploi combiné d'un caoutchouc synthétique polaire, comme un SBR ou un PI époxydé, avec un agent plastifiant liquide polaire, est bénéfique pour maximiser le gain en tan (δ) à 0°C et permet d'obtenir un compromis de propriétés amélioré, favorable à l'adhérence sur sol mouillé et à la résistance au roulement des bandes de roulement de pneumatiques réalisées à l'aide d'une telle composition.

## Revendications

1. Composition de caoutchouc à base au moins d'une matrice élastomérique comprenant un caoutchouc synthétique époxydé (ESR) ayant un taux de fonction époxy allant de 7 % à 25%, d'une charge renforçante comprenant une charge inorganique selon une fraction pondérale d'au moins 50% et d'un agent plastifiant comprenant un plastifiant liquide polaire.

2. Composition de caoutchouc selon la revendication 1, **caractérisée en ce que** l'ESR a une Tg comprise entre -10°C et -60°C.

3. Composition de caoutchouc selon la revendication 2, **caractérisée en ce que** l'ESR a une Tg de -20°C à -40°C.

4. Composition de caoutchouc selon l'une quelconque des revendications 1 à 3, **caractérisée en ce que** la matrice élastomérique comprend le caoutchouc ESR comme élastomère majoritaire.

5. Composition de caoutchouc selon la revendication 4, **caractérisée en ce que** le taux de caoutchouc ESR est compris dans un domaine allant de 50 à 100 pce.

6. Composition de caoutchouc selon l'une quelconque des revendications 1 à 5, **caractérisée en ce que** le ESR est un copolymère choisi parmi les copolymères de butadiène-styrène (SBR), les copolymères d'isoprène-styrène (SIR) et les copolymères d'isoprène-butadiène-styrène (SBIR) ou un polyisoprène de synthèse.

7. Composition de caoutchouc selon l'une quelconque des revendications 1 à 6, **caractérisée en ce que** l'agent plastifiant est constitué par le plastifiant liquide polaire.

8. Composition de caoutchouc selon l'une quelconque des revendications 1 à 7, **caractérisée en ce que** l'agent plastifiant comprend outre le plastifiant liquide polaire, au moins un autre plastifiant choisi parmi les plastifiants liquides non-polaires et les résines plastifiantes solides.

9. Composition de caoutchouc selon la revendication 1 à 8, **caractérisée en ce que** le plastifiant polaire est une huile de tournesol oléique.

10. Composition de caoutchouc selon l'une quelconque des revendications 1 à 9, **caractérisée en ce que** la matrice élastomérique comprend en outre un élastomère diénique choisi dans le groupe constitué par le caoutchouc naturel et les élastomères diéniques synthétiques, les élastomères diéniques synthétiques couplés et/ou étoilés et/ou encore fonctionnalisés, et les mélanges de ces élastomères.

11. Composition de caoutchouc selon l'une quelconque des revendications 1 à 10, dans laquelle la quantité de charge inorganique renforçante est comprise entre 50 et 150 pce.

12. Composition de caoutchouc selon la revendication 11, dans laquelle la charge inorganique renforçante est la silice.

13. Bande de roulement de pneumatique comportant une composition de caoutchouc selon l'une quelconque des revendications 1 à 12.

14. Pneumatique comportant une bande de roulement selon la revendication 13.

15. Procédé pour réaliser un compromis de propriétés améliorées d'adhérence sur sol mouillé et de résistance au roulement d'un pneumatique consistant en
- la préparation d'une composition de caoutchouc à base d'une matrice élastomérique comprenant un caoutchouc époxydé (ESR) ayant un taux de fonction époxy allant de 7% à 25%, une charge renforçante et à titre d'agent plastifiant un plastifiant liquide polaire ,
- à réaliser par extrusion une bande de roulement de pneumatique et
- à fabriquer un pneumatique comportant ladite bande de roulement.

## Patentansprüche

1. Kautschukzusammensetzung auf Basis mindestens einer elastomeren Matrix, umfassend einen epoxidierten Synthesekautschuk (ESR) mit einem Gehalt an Epoxidfunktionen im Bereich von 7% bis 25%, eines verstärkenden Füllstoffs, umfassend einen anorganischen Füllstoff in einem Gewichtsanteil von mindestens 50%, und eines Weichmachers, umfassend einen polaren flüssigen Weichmacher.

2. Kautschukzusammensetzung nach Anspruch 1, **dadurch gekennzeichnet, dass** der ESR eine Tg zwischen -10°C und -60°C aufweist.

3. Kautschukzusammensetzung nach Anspruch 2, **dadurch gekennzeichnet, dass** der ESR eine Tg zwischen -20°C und -40°C aufweist.

4. Kautschukzusammensetzung nach einem der Ansprüche 1 bis 3, **dadurch gekennzeichnet, dass** die elastomere Matrix den ESR-Kautschuk als überwiegendes Elastomer umfasst.

5. Kautschukzusammensetzung nach Anspruch 4, **dadurch gekennzeichnet, dass** der Gehalt an ESR-Kautschuk in einem Bereich von 50 bis 100 phr liegt.

6. Kautschukzusammensetzung nach einem der Ansprüche 1 bis 5, **dadurch gekennzeichnet, dass** es sich bei dem ESR um ein Copolymer, das aus Butadien-Styrol-Copolymeren (SBR), Isopren-Styrol-Copolymeren (SIR) und Isopren-Butadien-Styrol-Copolymeren (SBIR) ausgewählt ist, oder ein synthetisches Polyisopren handelt.

7. Kautschukzusammensetzung nach einem der Ansprüche 1 bis 6, **dadurch gekennzeichnet, dass** der Weichmacher aus dem polaren flüssigen Weichmacher besteht.

8. Kautschukzusammensetzung nach einem der Ansprüche 1 bis 7, **dadurch gekennzeichnet, dass** der Weichmacher neben dem polaren flüssigen Weichmacher mindestens einen weiteren Weichmacher, der aus unpolaren flüssigen Weichmachern und festen Weichmacherharzen ausgewählt ist, umfasst.

9. Kautschukzusammensetzung nach einem der Ansprüche 1 bis 8, **dadurch gekennzeichnet, dass** es sich bei dem polaren Weichmacher um hochölsäurehaltiges Sonnenblumenöl handelt.

10. Kautschukzusammensetzung nach einem der Ansprüche 1 bis 9, **dadurch gekennzeichnet, dass** die elastomere Matrix außerdem ein Dienelastomer aus der Gruppe bestehend aus Naturkautschuk und synthetischen Dienelastomeren, gekoppelten und/oder sternverzweigten und/oder funktionalisierten synthetischen Dienelastomeren und Mischungen dieser Elastomere umfasst.

11. Kautschukzusammensetzung nach einem der Ansprüche 1 bis 10, wobei die Menge des verstärkenden anorganischen Füllstoffs zwischen 50 und 150 phr liegt.

12. Kautschukzusammensetzung nach Anspruch 11, **dadurch gekennzeichnet, dass** es sich bei dem verstärkenden anorganischen Füllstoff um Kieselsäure handelt.

13. Reifenlauffläche, umfassend eine Kautschukzusammensetzung nach einem der Ansprüche 1 bis 12.

14. Reifen, umfassend eine Lauffläche nach Anspruch 13.

15. Verfahren zur Erzielung eines Kompromisses von verbesserten Nasshaftungs- und Rollwiderstandseigenschaften eines Reifens, das aus Folgendem besteht:
- Herstellen einer Kautschukzusammensetzung auf Basis einer elastomeren Matrix, umfassend einen epoxidierten Kautschuk (ESR) mit einem Gehalt an Epoxidfunktionen im Bereich von 7% bis 25%, eines verstärkenden Füllstoffs und eines polaren flüssigen Weichmachers als Weichmacher,
- Herstellen einer Reifenlauffläche durch Extrusion und
- Herstellen eines Reifens, der die Lauffläche umfasst.

## Claims

1. Rubber composition based at least on an elastomeric matrix comprising an epoxidized synthetic rubber (ESR) having an epoxy function content ranging from 7% to 25%, on a reinforcing filler comprising an inorganic filler in a weight fraction of at least 50% and on a plasticizing agent comprising a polar liquid plasticizer.

2. Rubber composition according to Claim 1, **characterized in that** the ESR has a T_{g} between -10°C and -60°C.

3. Rubber composition according to Claim 2, **characterized in that** the ESR has a T_{g} from -20°C to -40°C.

4. Rubber composition according to any one of Claims 1 to 3, **characterized in that** the elastomeric matrix comprises the ESR rubber as predominant elastomer.

5. Rubber composition according to Claim 4, **characterized in that** the ESR rubber content is within a range extending from 50 to 100 phr.

6. Rubber composition according to any one of Claims 1 to 5, **characterized in that** the ESR is a copolymer chosen from butadiene-styrene copolymers (SBR), isoprene-styrene copolymers (SIR) and isoprene-butadiene-styrene copolymers (SBIR) or a synthetic polyisoprene.

7. Rubber composition according to any one of Claims 1 to 6, **characterized in that** the plasticizing agent is constituted by the polar liquid plasticizer.

8. Rubber composition according to any one of Claims 1 to 7, **characterized in that** the plasticizing agent comprises, besides the polar liquid plasticizer, at least one other plasticizer chosen from non-polar liquid plasticizers and the solid plasticizing resins.

9. Rubber composition according to Claim 1 to 8, **characterized in that** the polar plasticizer is an oleic sunflower oil.

10. Rubber composition according to any one of Claims 1 to 9, **characterized in that** the elastomeric matrix also comprises a diene elastomer chosen from the group formed by natural rubber and synthetic diene elastomers, coupled and/or star-branched and/or functionalized synthetic diene elastomers, and mixtures of these elastomers.

11. Rubber composition according to any one of Claims 1 to 10, in which the amount of reinforcing inorganic filler is between 50 and 150 phr.

12. Rubber composition according to Claim 11, in which the reinforcing inorganic filler is silica.

13. Tyre tread comprising a rubber composition according to any one of Claims 1 to 12.

14. Tyre comprising a tread according to Claim 13.

15. Process for achieving a compromise of improved properties of grip on wet ground and of rolling resistance of a tyre, consisting of:
- the preparation of a rubber composition based on an elastomeric matrix comprising an epoxidized rubber (ESR) having an epoxy function content ranging from 7% to 25%, a reinforcing filler and, as plasticizing agent, a polar liquid plasticizer,
- producing a tyre tread via extrusion, and
- manufacturing a tyre comprising said tread.
